# DEMANDE DE BREVET EUROPEEN

(11) **EP 1 216 783 A1**
(43) Date de publication de la demande: **26.06.2002**
(21) Numéro de dépôt: 00403450.0
(22) Date de dépôt: 08.12.2000
(51) Int. Cl.: B23K 31/00

(54) **Procédé et système pour résoudre un problème se posant lors d'une opération de soudage ou analogue**

(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Rouault, Philippe, 78300 Poissy (FR)
(74) Mandataire: Pittis, Olivier

(57) **Abrégé**

L'invention concerne un procédé et un système pour diagnostiquer et/ou résoudre, en particulier à distance, un problème technique donné susceptible de se poser préalablement, pendant ou après une opération de travail thermique de métaux, en particulier dans le domaine du soudage ou du coupage et d'y apporter une solution la plus adaptée et ce, en minimisant le temps nécessaire à la résolution de ce problème et donc en diminuant les pertes de productivité susceptibles de survenir du fait de ce problème technique.

## Description

L'invention concerne un procédé et un système pour diagnostiquer et/ou résoudre, en particulier à distance, un problème technique donné susceptible de se poser préalablement, pendant ou après une opération de travail thermique de métaux, en particulier dans le domaine du soudage.

Afin de faciliter la compréhension, les termes "domaine du soudage" sont employés dans leur sens générique et recouvrent donc, dans le cadre de l'invention, les procédés de soudage proprement-dits, tels les procédés de soudage MIG (Metal Inert Gas), MAG (Metal Active Gas), TIG (Tungsten Inert Gas), plasma, à l'arc submergé ou à l'électrode, mais aussi les procédés de traitement thermiques de métaux analogues ou connexes, tels les procédé de coupage, notamment l'oxycoupage ou le coupage à l'arc plasma ou par faisceau laser ou d'électrons ; les procédés de marquage thermique, notamment le marquage plasma ou laser ; et la projection thermique, notamment la projection à l'arc plasma.

Actuellement, la connaissance technique dans le domaine du soudage se trouve disséminée dans de nombreux documents publiés, en général, par des sociétés spécialisées, telles que l'AWS (American Welding Society = Société Américaine de Soudage), l'ASM (American Society for Metals = Société Américaine des Métaux) ou le TWI (The Welding Institute = L'institut de Soudure).

Cette littérature, si elle est globalement complète et peut répondre à de nombreuses questions que se posent les praticiens du soudage, a toutefois l'inconvénient d'être incluse dans des ouvrages de quelques centaines à plusieurs milliers de pages.

Dès lors, on comprend aisément que, compte tenu du volume que représente ces ouvrages, il est souvent très difficile d'y trouver rapidement une solution à un problème technique donné se posant soit durant une opération de soudage, soit préalable ou subséquent à une telle opération.

Par ailleurs, l'architecture de l'information est dans les ouvrages classiques de type "littéraire", c'est-à-dire qu'une information donnée dans un chapitre de l'ouvrage ou du document consulté n'est généralement développée complètement qu'une seule fois dans une partie de cet ouvrage, des renvois ou références bibliographiques étant utilisés dans les autres chapitres.

Cela a l'avantage de ne pas alourdir les ouvrages mais oblige souvent le lecteur à consulter, au mieux, plusieurs chapitres ou, au pire, plusieurs ouvrages ou documents différents pour obtenir une information complète sur un seul et même sujet.

On comprend aisément que cette façon actuelle de procéder rend la recherche d'une solution rapide et efficace au problème technique qui se pose dans le domaine du soudage encore plus lourde, voire même ne permet pas toujours d'arriver à une telle solution.

En parallèle à ce constat, le développement de l'informatique, avec notamment des outils tels que les liens hypertextes et les réseaux Internet ou Intranet, permettent de relier entre eux des masses extrêmement importantes d'informations et surtout d'en faciliter l'accès.

Toutefois, la grande majorité des outils construits sur ces réseaux le sont d'une manière très semblable à celle décrite pour les documentations techniques de type ouvrages, c'est-à-dire sur le mode de la gestion de documents.

Dès lors, la personne qui recherche une information a certes la possibilité de consulter rapidement un très grand nombre de documents, dans la mesure où ceux-ci sont référencés, mais doit là encore extraire de ceux-ci les informations particulières qui l'intéressent.

Il en résulte une navigation en ligne souvent lourde et peu efficace pour quelqu'un qui recherche rapidement une solution technique particulière à un problème précis qui se pose.

En d'autres termes, un opérateur de soudage ayant à trouver très rapidement une information technique donnée permettant de résoudre un problème technique de soudage qui se pose dans un atelier, dans une usine ou sur un autre site souvent éloigné de la source d'informations, se heurte actuellement à un autre problème technique, à savoir celui de l'efficacité dans la recherche de l'information ou d'une solution technique applicable pour résoudre le plus rapidement possible son problème de soudage ou analogue.

Dit autrement, le problème qui se pose est de pouvoir trouver rapidement et efficacement une réponse ou solution technique la plus adaptée à la question technique précise qui se pose et ce, en particulier directement sur le site où il réalise son opération de soudage, de manière à réduire au maximum le temps perdu à rechercher cette information et donc à diminuer les pertes de productivité liées, par exemple, à l'arrêt momentané du procédé de soudage ou analogue dans lequel se pose le problème technique donné.

Le but de la présente invention est alors de proposer un procédé permettant de faciliter la résolution par un opérateur de soudage d'un problème technique donné et d'y trouver une solution ou la solution la plus adaptée et ce, en minimisant le temps nécessaire à la résolution de ce problème et donc en diminuant les pertes de productivité susceptibles de survenir du fait de ce problème technique.

L'invention porte alors un procédé pour diagnostiquer et/ou pour résoudre, en particulier à distance, un problème technique susceptible de se poser préalablement, pendant ou subséquemment à la mise en oeuvre d'un procédé de travail thermique, comprenant les étapes de :
(a) indication et/ou sélection par l'utilisateur d'un type de procédé de travail thermique mis ou à mettre en oeuvre,
(b) indication et/ou sélection par l'utilisateur d'au moins un type de problème technique à résoudre se posant ou susceptible de se poser lors de la mise en oeuvre du type de procédé de travail thermique de l'étape (a) ;
(c) indication et/ou sélection par l'utilisateur d'au moins un paramètre, de préférence plusieurs paramètres, relatif à la configuration dudit procédé de travail thermique de l'étape (a) ;
(d) traitement d'au moins une partie des indications ou des sélections effectuées par l'utilisateur aux étapes (a), (b) et (c) ;
(e) proposition à l'utilisateur d'au moins une information relative à au moins une modification ou au moins un réglage à effectuer d'au moins un paramètre de configuration dudit procédé de travail thermique de manière à résoudre au moins partiellement le type de problème technique de l'étape (b).

Selon un autre aspect, l'invention concerne aussi un procédé pour déterminer, régler, ajuster et/ou modifier au moins un paramètre d'un procédé de travail thermique, préalablement à ou pendant la mise en oeuvre dudit procédé de travail thermique par un utilisateur, comprenant les étapes de :
(a') indication et/ou sélection par l'utilisateur d'un type de procédé de travail thermique mis ou à mettre en oeuvre,
(b') indication et/ou sélection par l'utilisateur d'au moins paramètre relatif à la configuration dudit procédé de travail thermique, devant être ou susceptible d'être ajusté, modifié ou réglé, préalablement ou lors de la mise en oeuvre du procédé de travail thermique de l'étape (a'),
(c') traitement d'au moins une partie des indications ou des sélections effectuées par l'utilisateur aux étapes (a') et (b'),
(d') proposition à l'utilisateur d'au moins une information relative à au moins une modification ou au moins un réglage à effectuer d'au moins ledit paramètre de configuration dudit procédé de travail thermique.

Selon le cas, le procédé de l'invention peut comprendre l'une ou plusieurs des caractéristiques suivantes :
- il comporte l'étape supplémentaire (f) d'affichage, mémorisation, impression, transmission, interprétation et/ou exportation d'au moins une information obtenue à l'étape (e) ou à l'étape (d').
- il comporte l'étape supplémentaire (g) de modifier ou régler au moins un paramètre, de préférence plusieurs paramètres, de configuration dudit procédé de travail thermique en fonction d'au moins une information obtenue à l'étape (e) ou à l'étape (d').
- à l'étape (a) ou (a'), le type de procédé de travail thermique mis ou à mettre en oeuvre est choisi ou sélectionné dans le groupe formé par les procédés de coupage, les procédés de soudage, les procédés de marquage, les procédés de projection thermique et leurs combinaisons.
- aux étapes (a), (b) et/ou (c) ou (a') et/ou (b'), l'indication ou la sélection est réalisée par l'utilisateur par l'intermédiaire de moyens de saisie et/ou de sélection de données ou d'informations, par exemple les moyens de saisie et/ou de sélection de données peuvent comprendre un clavier d'ordinateur ou analogue, une souris, un système de reconnaissance vocale, un téléphone portable ou non, par exemple un téléphone portable équipé d'un système WAP™, un assistant ou organiseur personnel, tels que les dispositifs de ce type commercialisés par les sociétés Palm™, Ericsson™ ou Siemens™, un ordinateur, un réseau de transmission de données, tel le réseau internet ou un réseau interne, tel un réseau Intranet, un moniteur ou un écran à commande tactile ou digitale, etc.....
- à l'étape (f), l'affichage se fait sur un écran "digital", notamment un écran d'ordinateur, un écran de téléphone, un écran d'organiseur ou d'assistant personnel, un écran de montre ou tout écran de visualisation similaire ou analogue ayant une taille et/ou une résolution graphique suffisante pour permettre sa lecture, directe ou indirecte, par un utilisateur.
- à l'étape (b) ou (b'), le type de problème technique à résoudre est un problème lié :
   . au choix des consommables (fils d'apport, gaz de protection, électrodes....), des paramètres du procédé (tension, vitesse du fil, vitesse de soudage...), du réglage d'un équipement ou d'un matériel (distance tube contact / tôle à souder, inclinaison de la torche de soudage...),
   . à l'hygiène ou à la sécurité, par exemple la réduction des fumées émises, du bruit, des risques électriques, de la protection contre le rayonnement thermique...,
   . à un dysfonctionnement d'un équipement ou matériel, tel un mauvais dévidage du fil d'apport en GMAW, un problème de protection gazeuse lors de soudure GTAW, GMAW, PAW, l'encrassement ou l'usure du matériel, tels que les tubes contacts, les guides-fils...
   . à la productivité du procédé, notamment l'augmentation de la vitesse de soudage ou de découpe de matériaux, l'augmentation du taux de dépôt à l'heure de soudure, la réduction des travaux de parachèvement....
   . à la qualité du travail réalisé, tel que la réduction ou suppression des porosités, des caniveaux, de cordons trop bombés en soudage, ou la réduction des bavures ou de l'oxydation des faces de coupage en coupage...
- à l'étape (c) ou (b'), au moins un paramètre de configuration dudit procédé de travail thermique est choisi parmi la tension, l'intensité, la vitesse de dévidage du fil d'apport, la vitesse d'avance (ou de soudage), la nature du fil ou de l'électrode d'apport, la nature du gaz de protection ainsi que son débit et sa qualité, le choix du flux solide associé au fil en soudage arc submergé, l'orientation et la position de la torche de soudage par rapport à la soudure à réaliser, de la préparation et de l'épaisseur des pièces à assembler ou, pour le coupage, la vitesse de coupe et le gaz utilisé.
- à l'étape (d) ou (c'), le traitement des indications ou des sélections effectuées par l'utilisateur comprend :
   (i) une comparaison desdites indications ou sélections avec des informations de référence mémorisées dans au moins une base de donnée,
   (ii) une proposition d'au moins une solution possible, de préférence une solution optimisée et/ou meilleure que celle entrée par l'utilisateur, d'une explication et/ou d'une réponse à une question posée, mémorisée dans au moins une banque de données.
- il intègre un module d'acquisition automatique des paramètres de soudage, tels que l'intensité, la tension, la vitesse de soudage... et de transmission vers un écran, moniteur d'ordinateur, écran cristaux liquides..., et qui permet à l'utilisateur de questionner le système comme susmentionné.

Selon un autre aspect, l'invention porte aussi sur un système pour diagnostiquer et/ou pour résoudre, en particulier à distance, un problème technique susceptible de se poser préalablement, pendant ou subséquemment à la mise en oeuvre d'un procédé de travail thermique, comprenant :
(a) des moyens de saisie et/ou de sélection d'information permettant à un utilisateur d'indiquer et/ou de sélectionner :
   (i) un type de procédé de travail thermique mis ou à mettre en oeuvre,
   (ii) au moins un type de problème technique à résoudre se posant ou susceptible de se poser lors de la mise en oeuvre du type de procédé de travail thermique, et
   (ii) au moins un paramètre, de préférence plusieurs paramètres, relatif à la configuration dudit procédé de travail thermique,
(b) des moyens de traitement d'information pour réaliser un traitement d'au moins une partie des indications et/ou des sélections effectuées par l'utilisateur à l'aide des moyens de saisie et/ou de sélection d'information,
(c) des moyens de fourniture d'information pour réaliser un affichage, une mémorisation, une impression, une transmission, une interprétation et/ou une exportation d'au moins une information relative à au moins une modification et/ou au moins un réglage à effectuer d'au moins un paramètre de configuration dudit procédé de travail thermique de manière à résoudre au moins partiellement ledit problème technique.

Selon le cas, le système de l'invention peut comprendre l'une ou plusieurs des caractéristiques suivantes :
- il comprend au moins un poste utilisateur qui peut être un ordinateur portable ou fixe, qui comporte une unité centrale qui comprend elle même un microprocesseur, un ensemble de mémoire RAM et ROM, un disque dur qui a aussi une fonction de stockage, tous ces éléments étant couplés à une carte réseau ou un modem. Un écran permet de visualiser les informations proposée par l'invention. Le système comprend, en outre, des périphériques, tels qu'un clavier d'ordinateur et une souris. D'autre moyens de sélection de ligne ou fichier de type hypertexte peuvent être utilisés, par exemple un écran tactile ou un système de reconnaissance vocale. Le poste utilisateur peut être également un terminal relié directement à un serveur internet ou à un système d'exploitation central. Il peut également être un organiseur ou assistant personnel, un écran de téléphone ou de montre. Tous ces systèmes sont reliés à un serveur central renfermant au moins une base de données contenant la connaissance nécessaire à la résolution des problèmes posées sur les procédés de traitement thermique, un logicile de traitement, tel le logitiel NTK Surf™ de la société Némesia™, un serveur WEB ou, pour les postes portables sans connection avec un réseau, un lecteur de CD-Rom où sont localisées les informations de la base de données.
- la liaison entre le poste utilisateur et le serveur central comporte une ligne ou un réseau de communication à distance, notamment le réseau Internet.
- il comporte des moyens de transmission de données permettant de transmettre les choix ou sélections opérés par l'utilisateur au moyen des moyens de saisie et/ou de sélection d'information jusqu'audit serveur central.

En d'autres termes, le concept de l'invention s'oriente schématiquement autour de deux idées principales :
- l'une portant sur la recherche rapide et efficace d'une solution adaptée à un problème technique donné survenant pendant, avant ou subséquemment à une opération de soudage ou analogue, cette recherche se faisant, en particulier à distance en utilisant les réseaux de communication modernes, notamment le réseau Internet, et ne nécessite pas de manipulation peu aisée d'ouvrages, et
- l'autre portant sur l'application de cette solution au problème technique donné, c'est-à-dire sur la mise en oeuvre pratique et technique de cette solution au plan industriel de manière à résoudre ce problème et à pouvoir poursuivre le processus de soudage ou analogue qui, par exemple, avait été stoppé du fait des problèmes qui se posaient.

Pour y parvenir, selon l'invention, l'information à rechercher est organisée et subdivisée en termes d'objets de connaissance, de situations rencontrées et d'actions correctrices à apporter, lesquels sont stockés ou mémorisés sur des supports adaptés et peuvent être retrouvés facilement par interrogation par l'opérateur, c'est-à-dire en se servant des informations techniques entrées par l'opérateur, tels que la nature du métal à traiter, le type de procédé choisi, les gaz utilisés, les caractéristiques de la source de courant utilisée...

Grâce à l'invention, il n'est plus question, comme c'est le cas dans l'art antérieur, de devoir consulter de nombreux chapitres, sous-chapitres, paragraphes ou documents divers dont ils faut faire la synthèse avant de pouvoir trouver une solution au problème qui se pose.

Effet, l'invention est basée notamment sur l'utilisation et l'organisation d'éléments de connaissance soudage reliés entre eux, par exemple par des liens hypertextes ou analogues.

L'exemple suivant d'un procédé de soudage avec fil massif sous flux gazeux (appelé GMAW en anglais pour Gas Metal Arc Welding), donné à titre purement illustratif mais non limitatif, permet de mieux comprendre l'invention.

Dans une démarche classique de transmission d'une information technique relative au procédé GMAW de soudage avec fil massif sous flux gazeux, la structure d'un document ou d'un ouvrage traitant de ce procédé est généralement la suivante :
- présentation généraliste du procédé,
- modes de transfert du métal dans l'arc : court circuit, globulaire, pulvérisation axiale, spray....,
- les générateurs de soudage utilisables par ce procédé,
- les matériels de soudage utilisables : torches, dévidoirs.....,
- les consommables de soudage utilisables : fils d'apport, gaz de protection...,
- les matériaux pouvant être soudés,
- les applications particulières, et
- les problèmes rencontrés avec des solutions données.

Cette liste n'est pas exhaustive et l'ordre des informations peut varier d'un ouvrage ou document à un autre.

Au contraire, dans la structure selon l'invention, il n'est question que d'éléments de connaissance, c'est-à-dire que l'information n'est au départ plus structurée comme ci-dessus.

Ainsi, ce qui constituait un chapitre « matériel » devient groupe d'objets à part entière, tels que les différents types de dévidoirs, les torches de soudage, les tubes contacts...

Ensuite, selon l'invention, l'information est structurée par des liens hypertextes, alors que, dans une présentation classique, un sujet n'est traité qu'une seule fois et est évoqué dans des parties connexes, la structure en objet selon l'invention permet de relier, autant de fois qu'on le souhaite, un élément aux autres éléments connexes.

Il en est de même avec ce que l'on a définit comme une situation de soudage.

Alors qu'elle est habituellement traitée de façon unique et évoquée par une référence documentaire dans les autres parties des documents techniques, la segmentation par élément de connaissance selon l'invention permet de mettre une situation au noeud d'un réseau qui serait relié aux multiples situations qui peuvent la provoquer. En effet, en soudage, une situation est rarement univoque, c'est-à-dire qu'elle est généralement la résultante de plusieurs causes possibles.

De même, une action correctrice peut être commune à plusieurs situations et surtout engendrer des modifications sur des paramètres qui pourraient ne pas être pris en compte initialement par la personne qui consulte l'outil de connaissance.

La segmentation par objets reliés par des liens hypertexte permet de rappeler ces influences secondaires d'une action correctrice.

Une fois les éléments de connaissance créés, il faut évidemment donner une structure à l'ensemble.

L'idée conductrice est de répondre à des questions précises posées par les utilisateurs et de donner la bonne information recherchée au bon moment, c'est-à-dire de fournir une solution applicable immédiatement au procédé de soudage dans lequel se pose le problème.

Pour cela, la structure de l'information est calquée sur celle d'une opération de soudage.

Il n'est plus question de donner une information de type académique telle qu'elle a été décrite ci-dessus mais de la situer dans la chronologie d'une fabrication soudée. Cet ordre permet de donner une réponse selon le stade réalisé dans la conduite de l'opération de soudage mais que, dans une situation idéale, les informations données seraient évidemment plus profitables si elles étaient connues préalablement à toute action de soudage ou analogue pour éviter les problèmes susceptibles de se poser durant celle-ci.

Elle est donc segmentée en informations qu'un praticien du soudage pourrait rechercher:
- soit lors de la préparation des opérations de soudage, par exemple le choix des consommables ou des gaz de soudage à utiliser pour souder ou couper tel ou tel métal ou alliage métallique,
- soit durant la mise en oeuvre du soudage, par exemple la recherche de la réduction des nuisances de soudage, la résolution des dysfonctionnements des appareils de soudage ou encore la recherche de paramètres pour une configuration donnée,
- soit après soudage, par exemple la réponse à des problèmes de qualité, de réparation, voire de chercher à augmenter la productivité du procédé.

La décomposition en objet permet de relier entre elles des informations habituellement séparées dans des fichiers, ouvrages ou documents différents.

Il est ainsi possible, en associant la connaissance soudage aux moyens donnés par les liens hypertextes, de construire un module de guide de choix de produits qui inclut la nuance à souder et les consommables ou couples de produits de soudage à utiliser.

L'exemple pouvant être donné, à titre illustratif mais non limitatif, est celui du soudage GMAW des aciers dont la limite élastique est comprise entre 185 et 420 MPa.

Dans ce cas, après une sélection par grande classe de nuances, tels les aciers, les bases nickel,..., l'utilisateur peut choisir le matériau qu'il désire souder.

Dans cet exemple, la différenciation se fait par les propriétés mécaniques ou selon la norme.

Dans une page, sont regroupés les procédés de soudage pouvant être mis en oeuvre ainsi que les difficultés principales attendues lors du soudage de ces nuances.

L'utilisateur en choisissant le procédé GMAW arrive dans une structure tridimensionnelle qui combine la nuance, le choix du fil d'apport ainsi que celui du gaz de protection.

Alors que, d'une façon classique, il devrait avoir plusieurs documents traitant chacun d'un de ces thèmes, selon le procédé de l'invention, il a la possibilité de consulter toutes ces informations directement.

L'image traditionnelle du procédé de l'invention est celle d'une arborescence dont les branches finales seraient constituées par les nuances à souder, les fils d'apport et les gaz de protection.

Pour passer d'un thème à un autre, il convient de revenir en arrière au noeud central avant de repartir sur une nouvelle branche.

Selon l'invention, l'utilisation de liens hypertextes permet de passer directement de l'extrémité d'une arborescence à une autre.

Ainsi, pour choisir les consommables les plus adaptés à la mise en oeuvre d'un procédé de soudage GMAW d'aciers à limite élastique comprise entre 185 et 420 MPa, par exemple du fil-électrode fusible à utiliser, l'opérateur après avoir sélectionné le type de procédé de soudage souhaité susmentionné et les caractéristiques du matériau à souder, c'est-à-dire la plage d'élasticité, se verra proposer d'affiner sa demande en choisissant l'une ou plusieurs des options suivantes :
- choix d'une famille de fils fusibles ou de gaz de protection conseillés pour n'importe quel acier dans la plage de limite élastique comprise entre 185 et 420 MPa mais pour différents type de procédé de soudage (GTAW, SAW, GMAW...),
- choix de réglages de paramètres de soudage (intensité, tension, vitesse d'avance...) pour un d'un certains nombre de configurations de soudage susceptibles d'être rencontrées lors du soudage d'un acier ayant une limite élastique comprise entre 185 et 420 MPa, à savoir l'épaisseur du ou des métaux à souder ainsi que la configuration de l'assemblage à réaliser.

En sélectionnant un de ces choix possibles, l'utilisateur se verra alors proposer une solution à son problème, voire d'autres options destinées à encore affiner la recherche de la meilleure solution à son problème.

Par exemple, si l'utilisateur souhaite connaître une famille de fils fusibles conseillés pour n'importe quel acier ayant une limite élastique comprise entre 185 et 420 MPa et utilisables pour mettre en oeuvre un procédé de soudage GMAW, alors il se verra conseiller la famille des fils acier carbone E70S-x, par exemple les fils NERTALIC™ 70A ou 70S commercialisés par la société LA SOUDURE AUTOGENE FRANCAISE, et éventuellement se verra recommander d'utiliser avec ces fils une famille de gaz de soudage compatible avec le soudage à réaliser, tels les gaz des familles C1, M14, M21 ou M23, par exemples les gaz commercialisés par la société L'AIR LIQUIDE S.A. sous les dénominations commerciales ARCAL™ 14, ARCAL™ 21, ARCAL™ 22, ATAL™ 5A, ELOXAL™ 35 ou TERAL™ 23.

En outre, en sélectionnant un de ces gaz ou mélanges gazeux, l'utilisateur va lors obtenir des détails relatifs à ce ou ces différents gaz. Par exemple, si l'utilisateur sélectionne le gaz appelé ARCAL™ 21, il lui sera alors confirmé que ce gaz convient bien au soudage GMAW des aciers susmentionnés en association avec le fil suscité et qu'une telle association permet d'obtenir, lors de la mise en oeuvre du procédé de soudage, une bonne pénétration, de faibles émissions de fumée, d'un taux de projection de gouttelettes de métal en fusion peu élevé et une faible oxydation de la surface de la soudure.

De plus, la composition exacte de ce gaz lui sera aussi donnée, à savoir un mélange binaire d'argon avec 8% de CO₂. Eventuellement, des gaz alternatifs pourront aussi lui être proposés.

Il pourra également trouver comment régler ses paramètres de soudage pour cette famille d'aciers et pour le couple fil gaz mentionnés ci-dessus. Il lui sera par exemple proposé de souder à 90 cm/min, à 360 A et 29.5 V pour une vitesse de dévidage du fil de diamètre 1.2 mm de 12.8 mm sur un assemblage de tôle de 10 mm d'épaisseur en angle.

De manière analogue, l'utilisateur pourra obtenir davantage de détails relatifs au fil de soudage. Par exemple, en sélectionnant le fil dénommé NERTALIC™ 70S, il lui sera indiqué, outre les informations susmentionnées, les propriétés mécaniques qui résulteront de l'association de ce fil avec différents gaz ou mélanges de gaz ou d'autres informations similaires.

L'ensemble de ces informations est affiché sur un écran, par exemple un écran d'ordinateur ou de téléphone portable, et pourra, si besoin est, être imprimé, mémorisé, transféré à une autre personne ou à un autre ordinateur ou subir d'autres traitements.

Le même type d'architecture peut être utilisé pour structurer toutes les informations relatives à un procédé de soudage donné, par exemple celui du choix de la source de courant, c'est-à-dire le générateur de courant, pour le procédé GMAW susmentionné.

En effet, il est fréquent qu'un utilisateur cherche une information précise sur ce type d'appareil pour générer le courant de soudage.

Dès lors, selon l'invention, la décomposition et l'organisation de l'information en objet lui permet de trouver l'information rapidement sans être passé par la description complète et académique des générateurs de soudage que l'on trouve habituellement dans la littérature consacrée à ce sujet.

Il est alors possible de construire une structure qui relie les grands thèmes descriptifs, tels que la technologie mise en oeuvre, le type de courant délivré et son mode de contrôle, les caractéristiques générales ou, à l'inverse, les spécificités des générateurs de chacun des procédés de soudage.

Mais, il est toutefois possible de concevoir des relations plus fines entre sous-éléments, par exemple les générateurs GMAW et les technologies spécifiques mises en oeuvre pour ce procédé.

Ce type de lien permet d'écarter toute information superflue et trop générale pour l'utilisateur.

Par exemple, l'opérateur se voit d'abord proposer de choisir le type de procédé de soudage envisagé : GMAW, GTAW, SAW ou SMAW.

En choisissant le procédé GMAW, il lui est alors proposer plusieurs options liées à ce procédé, notamment les sources de courant utilisables pour le soudage à l'arc, les caractéristiques des cycles de soudage, les caractéristiques des sources de courant, les périphériques à ces sources, tels que transformateurs, redresseurs....

Comme précédemment, en choisissant par exemple l'option sources de courant utilisables pour le soudage à l'arc, l'utilisateur se voit alors proposer d'autres choix destinés à affiner la recherche de la solution à son problème.

Par ailleurs, la segmentation de l'information technique en objets permet de créer une structure permettant une résolution rapide et efficace des problèmes de soudage susceptibles de survenir avant, pendant et après soudage, coupage....

Toute difficulté ou interrogation peut être replacée dans son contexte pour l'utilisateur, c'est-à-dire que cela devient une situation.

A partir de là, il est possible de lui faire choisir parmi des menus des informations complémentaires qui le guident progressivement vers une action correctrice, c'est-à-dire une solution à son problème technique.

Dit autrement, le procédé de l'invention permet d'affiner le diagnostic et de proposer soit une solution au problème quand celui-ci est simple, soit d'émettre des d'hypothèses consistant en des solutions possibles ou envisageables pour résoudre son problème à partir desquelles l'utilisateur devra faire plusieurs tentatives pratiques avant d'arriver à la solution technique la plus adaptée.

L'action correctrice découle d'une arborescence de situations.

Une fois de plus, la segmentation en objets et l'utilisation des liens hypertextes permet au niveau de cette action de rappeler quelles peuvent en être les conséquences secondaires par un lien vers d'autres situations problématiques qui pourraient résulter de la résolution du premier problème.

En soudage, la modification d'un paramètre induit généralement des variations de plusieurs observables.

Par exemple, dans le cas d'une question posée par un praticien lors de la préparation de son installation de soudage, tel que le choix des galets de dévidage du fil en procédé GMAW ou arc submergé, l'utilisateur trouvera sa réponse par un menu problème « réglage des équipement », choisira le procédé voulu puis la ligne « choix des galets de dévidage » dans le menu proposé.

Si la question est posée pendant le soudage, le praticien aura le choix entre les différents procédés de soudage, puis il devra sélectionner son problème au sein de la liste proposée, par exemple des instabilités d'arc pour des problèmes liés au procédé GMAW. Il lui est alors proposé une liste de solutions comme celle de nettoyer la buse de la torche de soudage.

Dans le cas d'un problème détecté après soudage, par exemple celui lié à la présence de porosités dans des cordons de soudure, l'utilisateur peut entrer directement le terme "porosité" dans un moteur de recherche interne.

Il se voit alors proposer d'abord de donner le type de matériau à souder, tel qu'aluminium, acier, base nickel..., puis d'indiquer le procédé utilisé, GMAW, arc submergé...

Ces précisions permettent d'affiner la pose du problème tout en indiquant quels sont les facteurs d'influence.

A ce stade, l'utilisateur est face à trois possibilités d'origine des porosités, à savoir sursaturation en CO/CO₂, hydrogène ou azote.

Il doit alors faire un premier choix dont découle des explications relatives au processus à l'origine de son problème puis vers la ou les actions correctrices à appliquer.

Ainsi, si la cause possible est l'azote, il lui sera proposé de réduire les instabilités d'arc, de diminuer sa partie terminale, de réduire la tension de soudage ou encore de vérifier la qualité de la protection gazeuse.

Ces actions correctrices peuvent également mettre en garde l'utilisateur sur l'impact qu'elles peuvent avoir sur d'autres phénomènes.

Par le biais des liens hypertextes, il est possible, comme dans le cas de la modification de la tension de soudage dans l'exemple cité de rappeler que celle ci aura également des répercutions sur la forme des cordons de soudure.

L'utilisateur doit alors comprendre qu'il devra faire un compromis entre les différentes situations listées.

Sans la possibilité de relier ces situations à une action donnée, comme c'est le cas dans les systèmes actuels, l'utilisateur peut résoudre un problème mais en créer un autre sans avertissement préalable.

Cependant, si le problème posé est plus simple à résoudre, comme par exemple celui de l'existence de caniveaux en bordure du joint de soudure, les actions correctrices seront proposées directement sans passer par une étape d'hypothèse, c'est-à-dire que seules des informations nécessaires et connues de l'utilisateur sont requises.

Il va de soi que, pour pouvoir résoudre son problème grâce à la présente invention, le praticien doit donner un maximum de détails quant au procédé de soudage utilisé et ce, pour pouvoir accéder aux actions correctrices à mettre en oeuvre.

Des liens peuvent également être créer entre les objets et les situations ou les actions correctrices ou informatives.

Si l'utilisateur cherche les paramètres de soudage pour une nuance donnée et une configuration de soudage définie, il est possible en plus de répondre à cette question précise, de faire un lien hypertexte vers des ressources possibles de cette action.

Par exemple, les consommables de soudage recommandés peuvent être liés à cette procédure de soudage.

Un lien hypertexte pouvant fonctionner dans les deux sens, l'outil peut, dans un module de guide de choix de produits, proposer un lien direct avec la procédure de soudage appropriée à la configuration choisie.

La décomposition de la connaissance technique du soudage en modules élémentaires liés par des liens hypertextes permet alors d'introduire un élément de connaissance chaque fois que l'utilisateur pourrait chercher des informations à son sujet. Il n'est donc plus question de renvois successifs de chapitres en chapitres dans un ou plusieurs ouvrages ou de retours au noeud initial d'une arborescence pour la parcourir selon une autre direction.

Par exemple, un utilisateur recherchant à augmenter sa productivité pourrait être amené à consulter des informations dans des ouvrages relatifs aux procédés de soudage, coupage, à des documentations techniques sur les consommables ou à des livres de procédures de soudage optimisées.

L'utilisation des liens hypertexte permet à l'outil d'offrir un lien direct entre toutes ces informations. Après un passage par le choix du procédé, trois choix sont proposés à l'utilisateur, à savoir améliorer les paramètres de soudage, choix des produits ou utilisation de procédés particulièrement productifs.

En choisissant, de préférence en cliquant, à l'aide d'une souris commandant un curseur se déplaçant sur l'écran du poste utilisateur sur l'amélioration du choix des consommables, il aura accès à des informations tels que les taux de dépôts avec certains fils d'apport ou gaz alors qu'il n'est pas dans un module spécifique de choix de produits.

De même, les solutions sur l'hygiène et la sécurité regroupent des problèmes de bruits, de fumées, de chaleurs, de risque électriques, de dégagement gazeux toxiques ou de manipulations de bouteilles de gaz.

Ces différentes rubriques sont généralement traitées dans différents ouvrages sur l'électricité, les consommables de soudage ou de thermique.

Dans un atelier de travail de métaux, l'utilisateur aura donc accès à l'ensemble de ces données et aux recommandations qui s'appliquent à des sujets aussi divers que les consommables, la ventilation, le réglage des paramètres de soudage pour la réduction des émissions de fumées....

L'architecture de l'invention, telle que détaillée ci-avant, permet de résoudre des problèmes ou de répondre à des questions communes à de nombreux secteurs d'activité liés au soudage.

Il est également construit des liens transversaux qui ont pour origine le type de marché ou de construction.

Une segmentation de type chantier naval, appareils à pression, pose de pipe line, construction d'ouvrage d'art... est également la base d'une navigation dans l'outil où les liens seraient alors construits en fonction des préoccupations de chacun de ces secteurs d'activité.

Par exemple, le procédé arc submergé aura peu de chance d'être utilisé par un atelier de maintenance.

Par contre, les solutions portables, telles que les générateurs de courant basés sur la technique des onduleurs, donc de faible poids et volume, seraient reliées au secteur maintenance.

En résumé, l'invention est basée sur :
- une segmentation de la connaissance relative au soudage, coupage ou analogue par éléments de connaissance, ceux-ci pouvant être classés comme des objets élémentaires, par exemple un outil de soudage ou une partie d'un tel outil, des produits ou famille de produits, une situation descriptive d'un problème ou d'une interrogation, et des actions correctrices Par élément de connaissance il est entendu tout sujet, attribut, complément, situation élémentaire ou action correctrice qui constitue un objet ou un élément faisant sens pour un praticien du soudage. C'est la somme de phrases contenant ces éléments qui est décrite comme un document.
- une structure de la connaissance technique du soudage construite à partir des questions que peuvent se poser les praticiens.
- une utilisation de liens hypertextes qui permettent de relier autant de fois qu'il est nécessaire un objet, situation ou action à un autre élément de connaissance. Cela rend l'information rapidement accessible et dégagée d'un environnement superflu pour celui qui cherche une réponse à une question précise. Ces liens sont établis en fonction des règles de l'art et doivent être discriminants.
- une architecture globale qui correspond à une opération de soudage: préparation, action, contrôles et améliorations. Une structure croisée qui permet à un utilisateur d'un secteur de marché donné de trouver une information filtrée parmi la précédente et dédiée à un type d'applications.
- un moteur de recherche qui permet d'entrer directement en tout point du système.
- l'utilisation de formats informatiques de type HTML qui permettent de consulter l'outil à partir de la majorité des types de postes informatiques, tels que micro-ordinateurs, stations de travail, terminaux... équipés de système d'exploitation tels que Windows™, Unix™, Linux™...

Le procédé et le système de l'invention ont été schématisés sur les figures annexées.

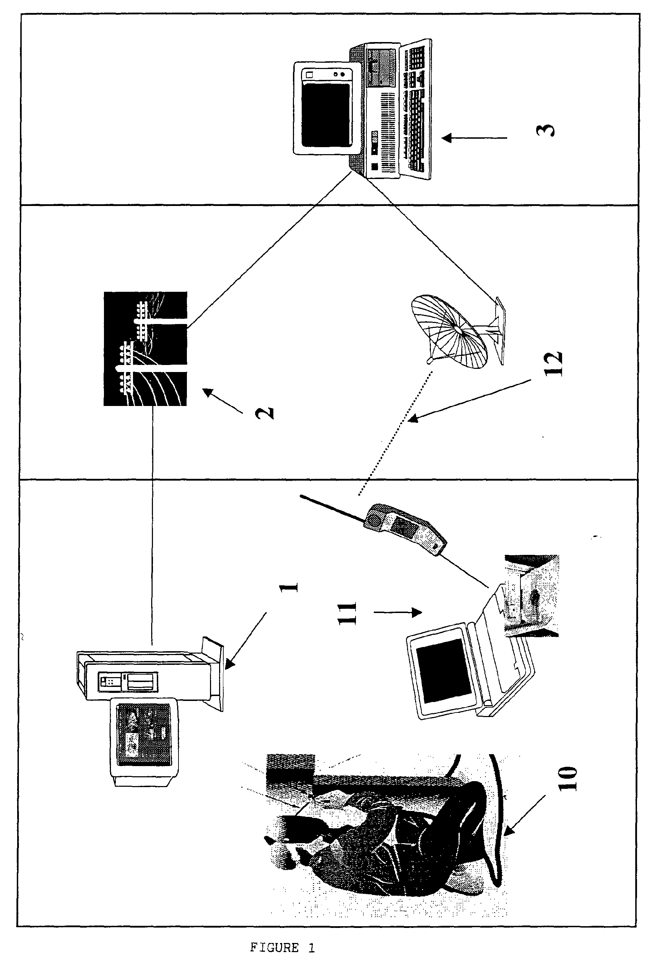

Sur la figure 1, on voit ainsi un opérateur 10 qui rencontre un problème, lors de la mise en oeuvre d'une opération de soudage ou analogue, par exemple un cordon de soudure de mauvaise qualité ou d'aspect médiocre.

Pour résoudre son problème rapidement, c'est-à-dire sans pénaliser, ou le moins possible, la productivité du procédé de soudage, l'opérateur 10 peut obtenir une réponse quasi-immédiate et en temps réel à ce problème grâce au procédé de l'invention et en procédant comme suit.

Tout d'abord, l'opérateur va indiquer ou sélectionner le type de procédé de travail thermique mis en oeuvre, par exemple un procédé de soudage à l'arc avec protection gazeuse, et indiquer ou sélectionner le type de problème technique qu'il rencontre, d'une part, et un ou plusieurs paramètres relatif à la configuration dudit procédé de soudage, d'autre part. Si nécessaire, d'autres informations techniques peuvent être fournies.

Ces indications et/ou sélections peuvent se faire au moyen d'un ordinateur 1 fixe ou portable, ou d'un téléphone 11 muni de moyens de saisie adaptés, tel qu'un clavier, une souris ou analogue.

Les informations de l'opérateur sont ensuite transmises par voie filaire 2 et/ou voie hertzienne 12, par exemples, jusqu'à un serveur informatique qui permet de réaliser un traitement de ces informations et qui, suite à ce traitement, va proposer à l'utilisateur une ou plusieurs solutions techniques à appliquer de manière à modifier efficacement son procédé de soudage, c'est-à-dire lui proposer une ou plusieurs informations correctrices, modifications ou réglages à effectuer d'un ou plusieurs paramètres de configuration dudit procédé de travail thermique de manière à tenter de résoudre le problème technique rencontré.

Ces informations correctrices seront retransmises à l'opérateur via les moyens de transmission d'informations suscités.

L'opérateur n'a plus qu'à modifier son procédé de soudage en prenant en compte ces informations correctrices et constater ainsi une disparition du problème technique auquel il était confronté.

Selon le cas, il sera aussi possible d'utiliser le procédé de l'invention pour donner un moyen à un praticien du soudage de se former à une technique ou un procédé de soudage qui lui serait peu familier, d'organiser la connaissance relative au soudage de façon à ce qu'elle réponde à des questions, interrogation ou problèmes techniques, et/ou d'illustrer ces propos par des exemples quantitatifs ou pédagogiques.

De façon plus générale, l'invention porte aussi sur un système de traitement de l'information destiné à faciliter l'acquisition d'une réponse à une question ou un problème qui se posent lors d'une opération de traitement thermique.

A partir d'un menu affiché sur un écran d'ordinateur, organiseur de poche, de téléphone portable, de montre..., il est possible d'activer un lien, par exemple hypertexte dans une page WEB, vers une base de donnée grâce au processeur de cet outil et au programme contenus dans sa mémoire.

Cette activation d'un des éléments d'un menu peut aussi se faire au moyen, par exemple, d'une souris, d'un pointeur sur un écran tactile, d'un système de reconnaissance vocale...

Ce lien permet d'activer à travers un réseau filaire ou hertzien un outil de stockage et de traitement de l'information.

Dans cet outil, l'information est contenue dans des fichiers en mémoire par exemple sur un disque dur et fonctionne grâce à un exécutable installé sur un système d'information, tel qu'un ordinateur grâce à des éléments tels qu'un disque dur, un microprocesseur et de la mémoire vive et autres éléments nécessaires au fonctionnement correcte de tout ordinateur ou système de traitement de l'information.

Cet exécutable, grâce au processeur, va rechercher l'information demandée dans une base de donnée, par exemple le programme Access™ de Microsoft™, du disque dur, l'extraire ou éventuellement la stocker momentanément en mémoire vive, et la renvoyer ensuite par le même moyen que lors de la requête vers l'utilisateur

Ce dernier pourra alors visualiser la réponse sur un écran situé sur un ordinateur portable ou non, un téléphone mobile, un organisateur de poche, une montre à l'aide à nouveau d'exécutables stockés dans la mémoire du poste utilisateur et fonctionnant grâce à un processeur ou une puce programmés.

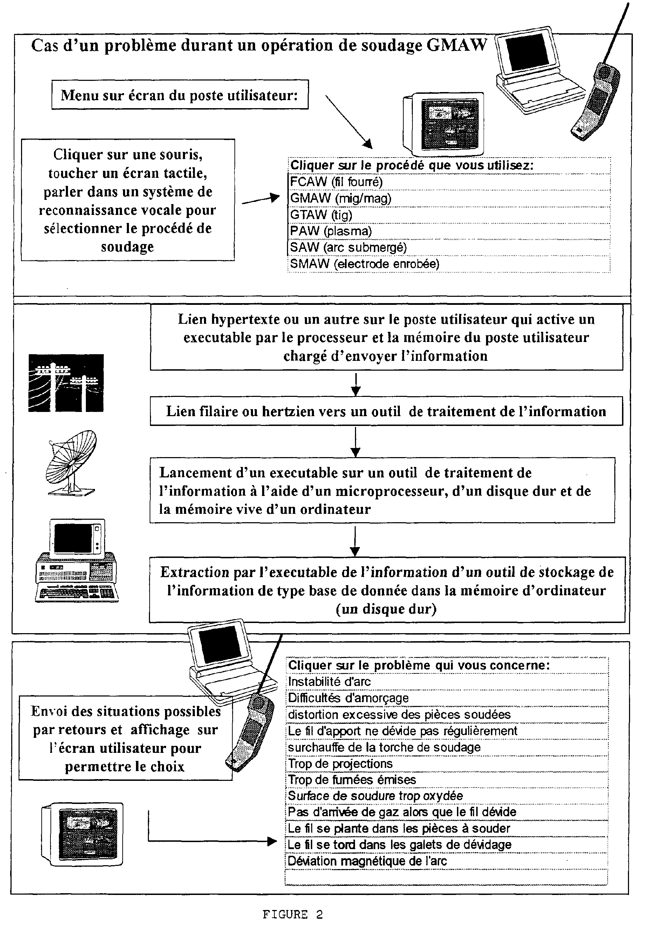

Sur la figure 2 est illustré, par ailleurs, le cas d'un problème se posant durant une opération de soudage GMAW, par exemple un problème de dévidage du fil alors que le dévidoir fonctionne correctement.

L'utilisateur, c'est-à-dire ici le soudeur, son responsable d'équipe ou l'ingénieur soudeur, va démarrer l'outil mettant en oeuvre le procédé de l'invention sur son ordinateur portable, son téléphone mobile ou de son organiseur de poche.

Pour ce faire, celui-ci va activer un programme exécutable à l'aide d'une souris, d'un écran tactile ou autre qui va envoyer l'ordre à la machine d'aller chercher une ou plusieurs informations sur un serveur central à travers au moins une connexion filaire ou hertzienne.

L'exécutable sur le serveur va alors charger la page d'accueil "soudage" qui va être transmise à l'utilisateur par le même moyen que précédemment.

En cliquant sur le lien hypertexte « incidents et remèdes », l'exécutable du poste serveur va à nouveau être activé.

Cette fois-ci, le lien hypertexte conduira un exécutable de gestion d'une base de donné à aller chercher l'information recherchée dans la ou les bases de données identifiées par le programme et stockées sur le disque dur du serveur ou sur un autre moyen de stockage mobile (CD Rom, disque ZIP...).

Le processus d'échange d'informations entre le poste utilisateur et le serveur est similaire au précédent.

A travers les choix (clicks) successifs liés au choix du procédé, à la description de son incident « problème de dévidage du fil fusible », une liste d'actions correctives sera proposée à l'utilisateur, toutes ces informations étant stockées dans une base de données sur le disque dur ou sur un support mobile de mémoire tel qu'un CD-Rom.

Ainsi, compte-tenu des vitesse d'échanges d'informations par ce mode de communication, l'utilisateur aura eu la réponse à son problème sans quitter son atelier et très rapidement, alors que la démarche classique aurait été soit de trouver la personne qui aurait pu résoudre le problème laquelle n'est pas forcement disponible ou présente sur le site, soit d'aller chercher dans les ouvrages de l'art relatifs au soudage la réponse à son problème mais au risque de ne pas y trouver de réponse adaptée ou incomplète et/ou de perdre beaucoup de temps.

En d'autres termes, la solution au problème qui se pose n'aurait, dans ce cas, pas pu être trouvée aussi rapidement. Le système de l'invention constitué par une base de données, des postes serveur et utilisateurs munis de processeurs, de programmes exécutables en mémoire, de base de données et d'outils de traitement des données ainsi que des connexions filaires ou hertzienne permet de répondre à un problème posé lors d'une opération de traitement thermique très rapidement et sur site.

Dans le cas de cet exemple, la résolution du problème passerait par exemple par les solutions proposées suivantes que le système de l'invention proposerait à l'opérateur de manière quasi instantanée, à savoir :
- Vérifier si le bon type de dévidoir est utilisé
- Vérifier l'état de surface du fil
- Nettoyer la buse de la torche
- Diminuer la pression du frein sur la bobine de fil
- Vérifier que le fil n'est pas trop oxydé en surface
- Vérifier que la bobine de fil est toujours bien bobinée
- Régler la pression des galets de dévidage
- Vérifier que les câbles de la torche de soudage ne sont pas trop tordus
- Utiliser un système poussé tiré

On comprend immédiatement que le procédé et le système selon la présente invention conduisent à un gain d'efficacité notable, lors de la mise en oeuvre d'un procédé de soudage ou analogue par un opérateur, par rapport à l'art antérieur.

## Revendications

1. Procédé pour diagnostiquer et/ou pour résoudre, en particulier à distance, un problème technique susceptible de se poser préalablement, pendant ou subséquemment à la mise en oeuvre d'un procédé de travail thermique, comprenant les étapes de :
(a) indication et/ou sélection par l'utilisateur d'un type de procédé de travail thermique mis ou à mettre en oeuvre,
(b) indication et/ou sélection par l'utilisateur d'au moins un type de problème technique à résoudre se posant ou susceptible de se poser lors de la mise en oeuvre du type de procédé de travail thermique de l'étape (a),
(c) indication et/ou sélection par l'utilisateur d'au moins un paramètre, de préférence plusieurs paramètres, relatif à la configuration dudit procédé de travail thermique de l'étape (a),
(d) traitement d'au moins une partie des indications ou des sélections effectuées par l'utilisateur aux étapes (a), (b) et (c),
(e) proposition à l'utilisateur d'au moins une information relative à au moins une modification ou au moins un réglage à effectuer d'au moins un paramètre de configuration dudit procédé de travail thermique de manière à résoudre au moins partiellement le type de problème technique de l'étape (b).

2. Procédé pour déterminer, régler, ajuster et/ou modifier au moins un paramètre d'un procédé de travail thermique, préalablement à ou pendant la mise en oeuvre dudit procédé de travail thermique par un utilisateur, comprenant les étapes de :
(a') indication et/ou sélection par l'utilisateur d'un type de procédé de travail thermique mis ou à mettre en oeuvre,
(b') indication et/ou sélection par l'utilisateur d'au moins paramètre relatif à la configuration dudit procédé de travail thermique, devant être ou susceptible d'être ajusté, modifié ou réglé, préalablement ou lors de la mise en oeuvre du procédé de travail thermique de l'étape (a'),
(c') traitement d'au moins une partie des indications ou des sélections effectuées par l'utilisateur aux étapes (a') et (b'),
(d') proposition à l'utilisateur d'au moins une information relative à au moins une modification ou au moins un réglage à effectuer d'au moins ledit paramètre de configuration dudit procédé de travail thermique.

3. Procédé selon l'une des revendications 1 ou 2, **caractérisé en ce qu'**il comporte au moins une étape supplémentaire de :
(f) affichage, mémorisation, impression, transmission, interprétation et/ou exportation d'au moins une information obtenue à l'étape (e) ou à l'étape (d'), et/ou
(g) modifier ou régler au moins un paramètre, de préférence plusieurs paramètres, de configuration dudit procédé de travail thermique en fonction d'au moins une information obtenue à l'étape (e) ou à l'étape (d').

4. Procédé selon l'une des revendications 1 à 3, **caractérisé en ce qu'**à l'étape (a) ou à l'étape (a'), le type de procédé de travail thermique mis ou à mettre en oeuvre est choisi ou sélectionné dans le groupe formé par les procédés de coupage, les procédés de soudage, les procédés de marquage, les procédés de projection thermique et leurs combinaisons.

5. Procédé selon l'une des revendications 1 à 4, **caractérisé en ce qu'**à l'étape (a), (b) et/ou (c) ou à l'étape (a') et/ou (b'), l'indication ou la sélection est réalisée par l'utilisateur par l'intermédiaire de moyens de saisie et/ou de sélection de données ou d'informations.

6. Procédé selon l'une des revendications 1 à 5, **caractérisé en ce qu'**à l'étape (f), l'affichage se fait sur un écran digital.

7. Procédé selon l'une des revendications 1 à 6, **caractérisé en ce qu'**à l'étape (b) ou à l'étape (b'), le type de problème technique à résoudre est un problème lié :
- au choix des consommables, des paramètres du procédé, du réglage d'un équipement ou d'un matériel,
- à l'hygiène ou à la sécurité,
- à un dysfonctionnement d'un équipement ou matériel,
- à la productivité du procédé,
- à la qualité du travail réalisé.

8. Procédé selon l'une des revendications 1 à 7, **caractérisé en ce qu'**à l'étape (c) ou à l'étape (b'), au moins un paramètre de configuration dudit procédé de travail thermique est choisi parmi la tension, l'intensité, la vitesse de dévidage du fil d'apport, la vitesse d'avance ou de soudage, la nature du fil ou de l'électrode d'apport, la nature, le débit et/ou la qualité du gaz de protection, le choix du flux solide associé au fil en soudage arc submergé, l'orientation et la position de la torche de soudage par rapport à la soudure à réaliser, de la préparation et/ou de l'épaisseur des pièces à assembler et, en coupage, la vitesse de coupe et/ou le gaz utilisé.

9. Procédé selon l'une des revendications 1 à 8, **caractérisé en ce qu'**à l'étape (d) ou à l'étape (c'), le traitement des indications ou des sélections effectuées par l'utilisateur comprend :
(i) une comparaison desdites indications ou sélections avec des informations de référence mémorisées dans au moins une base ou banque de données,
(ii) une proposition d'au moins une solution, une explication et /ou une réponse à une question posée, ladite solution, explication et /ou réponse étant mémorisée dans au moins une base ou banque de données.

10. Procédé selon l'une des revendications 1 à 9, **caractérisé en ce qu'**il intègre un module d'acquisition automatique des paramètres de soudage et de transmission desdits paramètres de soudage vers un écran d'affichage permettant d'afficher ou visualiser au moins un desdits paramètres de soudage.

11. Système pour diagnostiquer et/ou pour résoudre, en particulier à distance, un problème technique susceptible de se poser préalablement, pendant ou subséquemment à la mise en oeuvre d'un procédé de travail thermique, comprenant :
(a) des moyens de saisie et/ou de sélection d'information permettant à un utilisateur d'indiquer et/ou de sélectionner :
(i) un type de procédé de travail thermique mis ou a mettre en oeuvre,
(ii) au moins un type de problème technique à résoudre se posant ou susceptible de se poser lors de la mise en oeuvre du type de procédé de travail thermique, et
(ii) au moins un paramètre, de préférence plusieurs paramètres, relatif à la configuration dudit procédé de travail thermique,
(b) des moyens de traitement d'information pour réaliser un traitement d'au moins une partie des indications et/ou des sélections effectuées par l'utilisateur à l'aide des moyens de saisie et/ou de sélection d'information,
(c) des moyens de fourniture d'information pour réaliser un affichage, une mémorisation, une impression, une transmission, une interprétation et/ou une exportation d'au moins une information relative à au moins une modification et/ou au moins un réglage à effectuer d'au moins un paramètre de configuration dudit procédé de travail thermique de manière à résoudre au moins partiellement ledit problème technique.

12. Système selon la revendication 11, **caractérisé en ce qu'**il comprend un poste utilisateur comportant
- une unité centrale avec au moins un microprocesseur, au moins un ensemble de mémoire RAM et ROM, et/ou au moins un disque dur ayant une fonction de stockage, couplés à une carte réseau ou un modem, et
- un écran permet de visualiser des informations, et/ou
- un clavier de saisie, une souris, un écran tactile et/ou un système de reconnaissance vocale,
et ledit poste utilisateur coopérant avec au moins un serveur central renfermant au moins une base ou banque de données contenant au moins une partie de la connaissance nécessaire à la résolution de problèmes susceptibles de se poser lors de la mise en oeuvre de procédés de traitement thermique.

13. Système selon l'une des revendications 11 ou 12, **caractérisé en ce que** la liaison entre le poste utilisateur et le serveur central comporte une ligne ou un réseau de communication à distance, notamment le réseau Internet.

14. Système selon l'une des revendications 11 à 13, **caractérisé en ce qu'**il comporte des moyens de transmission de données permettant de transmettre les choix ou sélections opérés par l'utilisateur au moyen des moyens de saisie et/ou de sélection d'information jusqu'audit serveur central.

15. Système de traitement de l'information destiné à faciliter l'acquisition d'une réponse à une question ou à un problème technique lié à une opération de traitement thermique comportant
- des moyens d'activation de lien permettant à un opérateur d'activer un lien vers au moins une base de donnée grâce à au moins un processeur et à au moins un programme contenus dans au moins une mémoire,
- au moins un lien qui permet d'activer, à travers un réseau filaire ou hertzien, au moins un outil de stockage et de traitement de l'information, en particulier un lien hypertexte,
- au moins un outil de stockage et de traitement de l'information contenant au moins une information stockée dans un ou des fichiers conservés dans au moins une mémoire et fonctionnant grâce à un exécutable installé sur au moins un système d'information,
- au moins un exécutable qui, grâce à au moins un processeur, permet de rechercher l'information demandée dans au moins une basé de donnée, de l'extraire, éventuellement de la stocker momentanément en mémoire vive, et de la renvoyer ensuite vers l'opérateur,
- des moyens de visualisation ou réception d'information permettant à l'opérateur de recevoir et/ou visualiser la réponse formée d'au moins une information.
